# EUROPEAN PATENT APPLICATION

(11) **EP 4 524 944 A1**
(43) Date of publication of application: **19.03.2025**
(21) Application number: 24719449.1
(22) Date of filing: 12.04.2024
(51) Int. Cl.: G09G 3/32, G09F 9/302

(54) **DISPLAY DEVICE AND METHOD FOR DRIVING SAME**

(30) Priority: 20.07.2023 KR 20230094534
(71) Applicant: Samsung Electronics Co., Ltd., Suwon-si, Gyeonggi-do 16677 (KR)
(72) Inventor: LEE, Jaemoon, Suwon-si, Gyeonggi-do 16677 (KR); JUNG, Jaewon, Suwon-si, Gyeonggi-do 16677 (KR)
(74) Representative: Gulde & Partner
(86) International application number: PCT/KR2024/004974
(87) International publication number: WO 2025/018517

(57) **Abstract**

A display device is disclosed. The display device includes: a display panel including a plurality of light emitting elements; at least one driver for driving the plurality of light emitting elements; a power supply device; and at least one processor configured to identify off sequence information of the at least one driver in case of detecting power supplied to the power supply device as being off based on an output voltage of the power supply device, and sequentially control a plurality of signals transmitted to the at least one driver to be in a low state based on the identified off sequence information before a voltage for driving the display panel is shut down.

## Description

### [Technical Field]

The present disclosure relates to a display device and a driving method thereof, and more particularly, to a display device including a plurality of display modules and a driving method thereof.

### [Background Art]

The development of display technology also leads to various screen sizes of a display device. Previously, it was only possible to produce a display device of a limited size. However, it has recently become possible to produce a large-screen display device, breaking away from such a limited size of the display. Accordingly, usage of the large-screen display device is increasing in real life.

In particular, there is an increasing usage of a modular display device providing an expanded display screen by combining the plurality of display modules with each other. For example, the large-screen display device may include a digital signage billboard installed in a place with a large floating population, such as a subway station, a bus stop, or the like, and then displaying an outdoor advertisement through the display device. The modular display device may have the screen size of the display that is expanded or reduced flexibly based on the number of display modules and their combination relationships, thus providing convenience to a user using the large display device.

### [Disclosure]

### [Technical Solution]

According to one or more embodiments of the present disclosure, provided is a display device including: a display panel including a plurality of light emitting elements; at least one driver for driving the plurality of light emitting elements; a power supply device; and at least one processor configured to identify off sequence information of the at least one driver in case of detecting power supplied to the power supply device as being off based on an output voltage of the power supply device, and sequentially control a plurality of signals transmitted to the at least one driver to be in a low state based on the identified off sequence information before a voltage for driving the display panel is shut down.

The at least one processor may be configured to identify whether an alternating current (AC) power supplied through the power supply device is off by detecting a power line through which a direct current (DC) voltage is output from the power supply device.

The display panel may be a modular display panel including the plurality of display modules, and the at least one driver may include the plurality of drivers corresponding to the plurality of display modules.

The power supply device may include a first power supply device supplying power to a specific display module among the plurality of display modules; and a second power supply device supplying power to the specific display module among the plurality of display modules, and the at least one processor may be configured to detect whether power supplied to the first power supply device or the second power supply device is off based on an output voltage of the first power supply device or the second power supply device.

The at least one processor further may include a detection circuit for outputting an identified off sequence signal to the at least one driver in case that the output voltage of the power supply device is decreased to reach a predetermined voltage as power supplied from the power supply device is off.

The detection circuit may be connected to a power detection (V sense) line terminal for detecting the output voltage of the power supply device.

The detection circuit may include a first resistor connected to an output terminal of the power supply device and a second resistor having one end connected to the first resistor and the other end grounded, and identify whether the output voltage of the power supply device is decreased to reach the predetermined voltage based on an output terminal voltage between the first resistor and the second resistor.

The detection circuit may include a first detection circuit connected to the first power supply device, a second detection circuit connected to the second power supply device, and a logic circuit connected to a first output terminal of the first detection circuit and a second output terminal of the second detection circuit, the logic circuit may be implemented as an OR gate for outputting a low signal in case that a voltage of the first output terminal is low and a voltage of the second output terminal is low, and the at least one processor may be configured to identify that power supplied to the power supply device is off in case that the low signal is output from the logic circuit.

The at least one processor may be configured to sequentially control a reset signal and at least one power signal, transmitted to the at least one driver, to be in the low state, based on the identified off sequence information.

The at least one processor may be configured to sequentially control the plurality of signals among a reset signal, at least one power signal, at least one sync signal, and at least one clock signal, transmitted to the at least one driver, to be in the low state based on the identified off sequence information.

According to one or more embodiments of the present disclosure, provided is a driving method of a display device, the method including: identifying off sequence information of at least one driver for driving a display panel in case that power supplied to a power supply device is detected as being off based on an output voltage of the power supply device; and sequentially controlling a plurality of signals transmitted to the at least one driver to be in a low state based on the identified off sequence information before a voltage for driving the display panel is shut down.

In the identifying of the off sequence information of the at least one driver, whether an alternating current (AC) power supplied through the power supply device is off may be identified by detecting a power line through which a direct current (DC) voltage is output from the power supply device.

According to one or more embodiments of the present disclosure, provided is a non-transitory computer-readable medium storing a computer instruction that causes an electronic device to perform an operation in case of being executed by a processor of a display device, wherein the operation includes: identifying off sequence information of at least one driver for driving a display panel in case that power supplied to a power supply device is detected as being off based on an output voltage of the power supply device; and sequentially controlling a plurality of signals transmitted to the at least one driver to be in a low state based on the identified off sequence information before a voltage for driving the display panel is shut down.

### [Description of Drawings]

Aspects, features and advantages of specific embodiments of the present disclosure are become clearer through the following description provided with reference to the accompanying drawings.
FIG. 1 is an example diagram of a display device according to an embodiment of the present disclosure.
FIG. 2 is a block diagram showing a configuration of the display device according to one or more embodiments.
FIGS. 3A and 3B are block diagrams each specifically showing a configuration of the display device according to one or more embodiments.
FIG. 4 is a diagram for explaining a driving method of a display device according to one or more embodiments.
FIGS. 5A to 5C are diagrams for respectively explaining implementation examples of a detection circuit according to one or more embodiments.
FIG. 6 is a diagram for explaining an off sequence operation according to one or more embodiments.
FIG. 7 is a diagram for explaining an off sequence operation according to one or more embodiments.
FIGS. 8A and 8B are diagrams for respectively explaining the driving method of a display device according to one or more embodiments.
FIG. 9 is a block diagram specifically showing a configuration of the display device according to one or more embodiments.

### [Best Mode]

Hereinafter, the present disclosure is described in detail with reference to the accompanying drawings.

General terms that are currently widely used are selected as terms used in embodiments of the present disclosure in consideration of their functions in the present disclosure, and may be changed based on the intentions of those skilled in the art or a judicial precedent, the emergence of a new technique, and the like. In addition, in a specific case, terms arbitrarily chosen by an applicant may exist. In this case, the meanings of such terms are mentioned in detail in corresponding description portions of the present disclosure. Therefore, the terms used in the present disclosure need to be defined on the basis of the meanings of the terms and the contents throughout the present disclosure rather than simple names of the terms.

In the present disclosure, an expression "have", "may have", "include", "may include" or the like, indicates existence of a corresponding feature (for example, a numerical value, a function, an operation, or a component such as a part), and does not exclude existence of an additional feature.

An expression, "at least one of A or/and B" may indicate either "A or B", or "both of A and B".

Expressions "first", "second" and the like, used in the present disclosure, may indicate various components regardless of the sequence and/or importance of the components. These expressions are used only to distinguish one component from another component, and do not limit the corresponding component.

In case that any component (for example, a first component) is mentioned to be "(operatively or communicatively) coupled with/to" or "connected to another component (for example, a second component)", it is to be understood that any component may be directly coupled to another component or may be coupled to another component through still another component (for example, a third component).

A term of a singular number used herein is intended to include its plural number unless explicitly indicated otherwise. It is to be understood that a term "include", "formed of", or the like used in this application specifies the existence of features, numerals, steps, operations, components, parts or combinations thereof, which is mentioned in the specification, and does not preclude the existence or addition of one or more other features, numerals, steps, operations, components, parts or combinations thereof.

In the present disclosure, a "module" or a "~er/~or" may perform at least one function or operation, and be implemented by hardware, software, or a combination of hardware and software. In addition, a plurality of "modules" or a plurality of "~ers/~ors" may be integrated in at least one module to be implemented by at least one processor (not shown) except for a "module" or a "~er/or" that needs to be implemented by specific hardware.

In the present disclosure, a "user" may indicate a person who receives a content through a display device, and is not limited thereto.

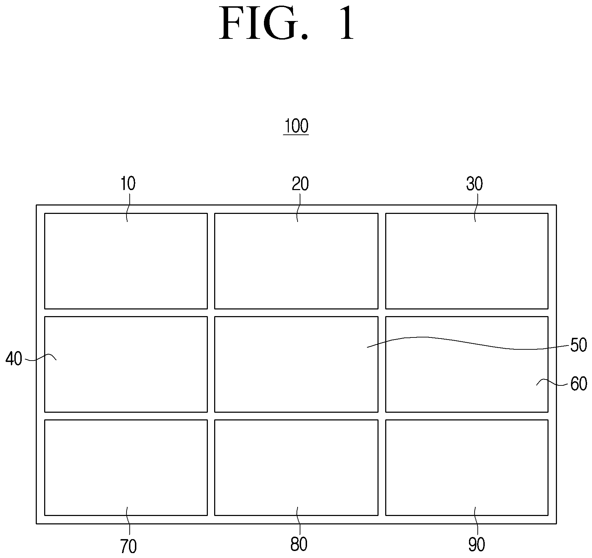

FIG. 1 is an example diagram of a display device according to an embodiment of the present disclosure.

As shown in FIG. 1, a display device 100 according to one or more embodiments may be implemented by physically connecting a plurality of display modules 10 to 90 with each other. Here, each of the plurality of display modules 10 to 90 may include a plurality of light emitting elements, for example, self light-emitting elements, arranged in a matrix form. In particular, the display module may be implemented as a light emitting diode (LED) module where each pixel is implemented as an LED pixel, or as an LED cabinet where the plurality of LED modules are connected with each other, and is not limited thereto. For example, the display module may be implemented as a liquid crystal display (LCD), an organic LED (OLED), an active-matrix OLED (AMOLED), a plasma display panel (PDP), or the like. However, for convenience of explanation, the description is hereinafter provided assuming that each display module is implemented as the LED cabinet.

In one or more embodiments, the display device may be implemented as a single large display device such as a digital signage or an electronic display, or as a small display device such as a monitor for a personal computer or a television (TV), and is not limited thereto.

Meanwhile, the plurality of display modules 10 to 90 may receive a driving voltage from a power supply device. In detail, the power supply device may provide a driving voltage V_LED for driving the light emitting element (e.g., LED) using a driver. Therefore, in case that the power supply device is turned off, the driving voltage provided to the display modules 10 to 90 may also be cut off, and the display modules 10 to 90 may also stop their operations or may be turned off.

In one example, in case that an alternate current (AC) power provided to the power supply device is turned off, the voltage output from the power supply device may be gradually decreased over time, and the output voltage of the power supply device may ultimately reach zero voltage (V).

Meanwhile, each of the plurality of display modules 10 to 90 may be controlled based on an operation of an individual driver integrated circuit (IC). A power ON/OFF sequence may be required to prevent a screen transient based on a specification of the driver IC. Here, the power ON/OFF sequence may indicate an order of providing or blocking a plurality of signals in case of providing or blocking power.

In addition, a plurality of power systems may be required as a function of the driver IC becomes more complex, thus requiring a situation requiring a more complex power ON/OFF sequence. However, a failure to follow the power ON/OFF sequence of the driver IC in an unexpected AC power-off situation may cause the screen transient.

Accordingly, the description hereinafter describes various embodiments in which the screen transient is prevented by detecting the output voltage of the power supply device and controlling the signal based on the off sequence of the driver IC before a shutdown occurring due to the AC power-off.

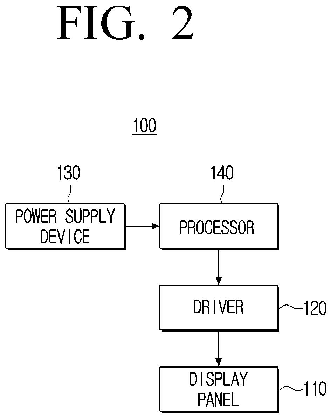

FIG. 2 is a block diagram showing a configuration of the display device according to one or more embodiments.

Referring to FIG. 2, the display device 100 may include a display panel 110, at least one driver 120, a power supply device 130, and at least one processor 140.

The display panel 110 may be implemented as a display including the self light-emitting element or a display including a non-light emitting element and a backlight. For example, the display panel 110 may be implemented in various types of displays such as a liquid crystal display (LCD), an organic light emitting diode (OLED) display, a light emitting diode (LED) display, a micro light emitting diode (micro LED) display, a mini LED display, a plasma display panel (PDP), a quantum dot (QD) display, a quantum dot light-emitting diode (QLED) display. The display panel 110 may also include a driving circuit, a backlight unit and the like, which may be implemented in a form such as an a-si thin film transistor (TFT), a low temperature poly silicon (LTPS) TFT, or an organic TFT (OTFT). In one example, a touch sensor detecting a touch operation while having the form of a touch film, a touch sheet, a touch pad, or the like may be disposed on a front surface of the display panel 110, and may be implemented to detect various types of touch input. For example, the display panel 110 may detect various types of touch inputs, such as a touch input by a user hand, a touch input by an input device such as a stylus pen, and a touch input by a specific electrostatic material. Here, the input device may be implemented as a pen-type input device that may be referred to by various terms such as an electronic pen, a stylus pen, and an S-pen. In one example, the display panel 110 may be implemented as a flat display, a curved display, a foldable and/or rollable flexible display.

At least one driver 120 may drive the display panel 110 under control of at least one processor 140. In one example, at least one driver 120 may be implemented as the driver integrated (IC) chip. For example, at least one driver 120 may drive each LED pixel by applying the driving voltage or allowing a driving current to flow to drive each self light-emitting element included in the display panel 110, for example, the LED pixel, under the control of the processor 140.

In one example, at least one driver 120 may each be implemented as a display driver integrated (DDI) circuit (DDIC) chip. For example, the DDI may include a gate IC and a source IC. The gate IC may serve to turn on/off subpixels, and the source IC may generate a color difference to be expressed by the subpixels. For example, each subpixel may be driven by flowing the current to the TFT by using a voltage difference between the source IC and gate IC. In some manufacturers or products, the gate IC may be embedded in the TFT (e.g., LTPS). The power supply device 130 may supply power to the display device 100. For example, the power supply device 130 may receive an AC voltage, generate a rectified direct current (DC) voltage, and supply the same to the display device 100. For example, the power supply device 130 may be implemented as a direct current power device, for example, a power supply, which may convert commercial power, such as 110 V or 220 V, into a voltage required in the display device 100, and is not limited thereto. The power supply may be hardware converting the alternating current into the direct current for the current to be used stably in each of the plurality of display modules 10 to 90 and supplying power to each system. The power supply may largely include an input electromagnetic interference (EMI) filter unit, an AC to DC rectifier unit, a DC to DC switching converter unit, an output filter, and an output unit. The power supply may be implemented, for example, as a switched mode power supply (SMPS).

At least one processor 140 may control overall operations of the display device 100. In detail, at least one processor 140 may be connected to each component of the display device 100 to thus control the overall operations of the display device 100. At least one processor 140 may be one or more processors.

At least one processor 140 may perform the operation of the display device 100 according to various embodiments by performing at least one instruction stored in a memory 170.

At least one processor 140 may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor 140 may control one of other components of the electronic device or any combination thereof, and perform its operation related to communication or data processing. At least one processor 140 may execute at least one program or instruction stored in the memory. For example, at least one processor may perform a method according to one or more embodiments of the present disclosure by executing at least one instruction stored in the memory.

The plurality of operations may be performed by one processor or may be performed by the plurality of processors in case that a method according to one or more embodiments of the present disclosure includes the plurality of operations. For example, a first operation, a second operation, and a third operation may be performed by the method according to one or more embodiments. In this case, the first operation, the second operation, and the third operation may all be performed by a first processor. Alternatively, the first operation and the second operation may be performed by the first processor (for example, a general-purpose processor), and the third operation may be performed by a second processor (for example, an artificial intelligence-only processor).

At least one processor 140 may be implemented as a single core processor including a single core, or may be implemented as at least one multicore processor including a plurality of cores (e.g., homogeneous multicores or heterogeneous multicores). In case that at least one processor 140 is implemented as the multicore processor, each of the plurality of cores included in the multicore processor may include a processor internal memory such as a cache memory or an on-chip memory, and a common cache shared by the multicores may be included in the multicore processor. In addition, each of the plurality of cores included in the multicore processor (or some of the multicores) may independently read and perform a program instruction for implementing the method according to one or more embodiments of the present disclosure, or all (or some) of the multicores may be linked with each other to read and perform the program instruction for implementing the method according to one or more embodiments of the present disclosure.

In case that the method according to one or more embodiments of the present disclosure includes a plurality of operations, the plurality of operations may be performed by one core among the plurality of cores included in the multicore processor, or may be performed by the plurality of cores. For example, in case that the first operation, the second operation, and the third operation are performed by the method according to one or more embodiments, the first operation, the second operation, and the third operation may all be performed by a first core included in the multicore processor. Alternatively, the first operation and the second operation may be performed by the first core included in the multicore processor, and the third operation may also be performed by a second core included in the multicore processor.

In the embodiments of the present disclosure, the processor may indicate a system-on-chip (SoC) in which at least one processor and other electronic components are integrated, the single core processor, the multicore processor, or the core included in the single core processor or the multicore processor. Here, the core may be implemented as the CPU, the GPU, the APU, the MIC, the DSP, the NPU, the hardware accelerator, the machine learning accelerator, or the like. However, the embodiments of the present disclosure are not limited thereto. Hereinafter, for convenience of explanation, at least one processor 140 is referred to as the processor 140.

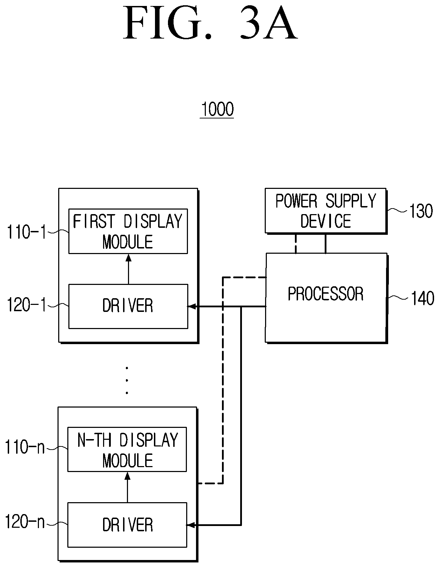

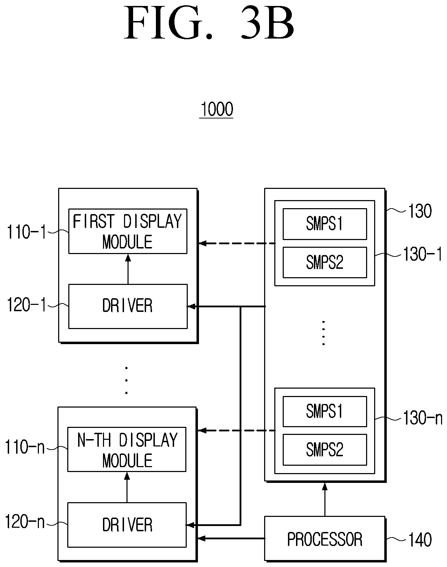

FIGS. 3A and 3B are block diagrams each specifically showing a configuration of the display device according to one or more embodiments.

According to one or more embodiments, the display panel 110 may include a plurality of display modules 110-1 to 110-n. In particular, the display panel 110 may be configured by connecting and assembling the plurality of display modules 110-1 to 110-n with each other. Here, each of the plurality of display modules may include the plurality of light pixels, for example, the self light-emitting pixels, arranged in the matrix form. In an embodiment, the display panel 110 may be implemented as the plurality of LED modules (or the LED modules each including at least one LED element) and/or the plurality of LED cabinets. In addition, the LED module may include the plurality of LED pixels. In one example, the LED pixel may be implemented as an RGB LED, and the RGB LED may include a red LED, a green LED, and a blue LED.

According to one or more embodiments, at least one driver 120 may include a plurality of drivers 120-1 to 120-n connected to the plurality of display modules 110-1 to 110-n. The plurality of drivers may be configured to supply the driving current to the plurality of display modules 110-1 to 110-n. The driving current may correspond to each control signal input from the processor 140 described below. For example, the plurality of drivers may output the driving current by adjusting the supply time or intensity of the driving current supplied to the plurality of display modules 110-1 to 110-n to correspond to each control signal input from the processor 140.

In one example, the display device 100 may further include a plurality of converters (for example, a DC to DC converter). In case of receiving the DC voltage output from the power supply device 130, the plurality of converters may generate the DC voltage that is the driving voltage of each corresponding component. A first converter among the plurality of converters may convert the DC voltage input from the power supply device 130 into the driving voltage V_LED supplied to the light emitting element. For example, in case of receiving the DC output voltage of the power supply device 130 that is generated based on the AC power, the first converter may generate the DC voltage V_LED that is balanced and rectified for the current provided to an array of light emitting elements to be the same, and then provide the same to each light emitting element. A second converter among the plurality of converters may convert the DC voltage input from the power supply device 130 into a driving voltage V_DD supplied to the driver 120. In detail, for example, in case of receiving the DC output voltage of the power supply device 130 that is generated based on the AC power, the second converter may generate the driving voltage V_DD of the driver 120 that is set based on a specification of a component such as the internal field effect transistor (FET) or transistor (TR) of the driver 120 and provide the same to each driver 120. For example, if the power supply device 130 receiving an alternating current voltage of 220 V generates a direct current voltage of 19 V and then provides the same to each of the first converter and the second converter, the first converter may convert the driving voltage V_LED of the light emitting element into a direct current voltage of 3.8 V, the second converter may convert the driving voltage V_DD of the driver 120 into a direct current voltage of 3.3 V, and the converters may then respectively provide the same to the light emitting element and the driver 120. Hereinafter, for convenience of explanation, both the driving voltage V_LED and the driving voltage V_DD are collectively referred to as a voltage for driving the display panel 110.

According to one or more embodiments, the power supply device 130 may include a plurality of power supply devices supplying power to the plurality of display modules 110-1 to 110-n.

According to an embodiment shown in FIG. 3B, each of the power supply devices 130-1 to 130-n may supply power to the plurality of display modules 110-1 to 110-n. For example, the plurality of display modules 110-1 to 110-n may each be implemented as the LED cabinet, and the plurality of power supply devices 130-1 to 130-n may supply power to the respective LED cabinets.

In one example, the plurality of power supply devices 130-1 to 130-n may each include a plurality of switched mode power supplies (SMPS). For example, as shown in FIG. 3B, the power supply device 130-1 corresponding to the first display module 110-1 among the plurality of display modules 110-1 to 110-n may include a plurality of SMPS, e.g. SMPS 1 and SMPS 2, and the power supply device 130-n corresponding to the n-th display module 110-n may also include the plurality of SMPS, e.g. SMPS 1 and SMPS 2.

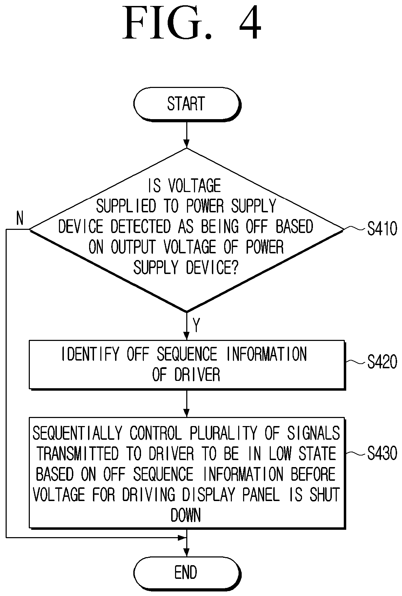

FIG. 4 is a diagram for explaining a driving method of a display device according to one or more embodiments.

Referring to FIG. 4, the processor 140 may identify "off" sequence information of at least one driver 120 (S420) in case of detecting the voltage supplied to the power supply device 130 as being "off" (quotation marks omitted in the following) based on the output voltage of the power supply device 130 (S410-Y). In one example, the processor 140 and at least one driver 120 may be implemented as separate circuits (or separate chips). For example, the processor 140 may be implemented as a field programmable gate array (FPGA), and the driver 120 may be implemented as a display driver integrated circuit (IC), and are not limited thereto.

In one example, the off sequence may be different based on each specification of at least one driver 120. For example, the off sequence information corresponding to the specification of each driver 120 may be pre-stored in the memory in the form of a lookup table or received from an external device.

In one example, the processor 140 may identify whether an alternating current (AC) power supplied through the power supply device 130 is off by detecting a power line through which a direct current (DC) voltage is output from the power supply device 130. For example, the processor 140 may identify whether the alternating current (AC) power is off based on the output voltage of a power detection (V sense) line for detecting the output voltage of the power supply device 130.

The processor 140 may sequentially control the plurality of signals transmitted to at least one driver to be in a low state based on the identified off sequence information before power for driving the display panel 110 is shut down (S430).

According to one or more embodiments, the processor 140 may sequentially control a reset signal and at least one power signal, transmitted to the driver 120 to be in the low state based on the off sequence information of the driver 120.

According to one or more embodiments, the processor 140 may sequentially control a plurality of signals among the reset signal, at least one power signal, at least one sync signal, and at least one clock signal, transmitted to the driver 120, to be in the low state based on the off sequence information of the driver 120.

According to one or more embodiments, the processor 140 may further include a detection circuit for outputting an identified off sequence signal to at least one driver 120 in case that the output voltage of the power supply device 130 is decreased to reach a predetermined voltage as power supplied from the power supply device 130 is off. In one example, the detection circuit may be connected to a power detection (V sense) line terminal for detecting the output voltage of the power supply device 130.

According to one or more embodiments, as shown in FIG. 3B, the plurality of power supply devices (for example, SMPS1 and SMPS2) corresponding to one display module (for example, the cabinet) may be provided. Here, if the plurality of power supply devices are all off, the processor 140 may sequentially control the plurality of signals transmitted to the driver corresponding to the corresponding display module to be in the low state based on off sequence information.

According to one or more embodiments, as shown in FIG. 3B, the plurality of power supply devices (for example, SMPS1 and SMPS2) corresponding to one display module (for example, the cabinet) may be provided. Here, if only some of the power supply devices are off, the processor 140 may control the driver corresponding to the corresponding display module for the corresponding display module to be operated in a low luminance mode. In one example, the processor 140 may control the driver corresponding to the corresponding display module for the corresponding display module to be operated in the low luminance mode based on a power amount of the power supply device in an on state among the plurality of power supply devices, a difference between a power amount of the power supply device in case that all the plurality of power supply devices are on and a power amount of the power supply device in a current on state, or the like.

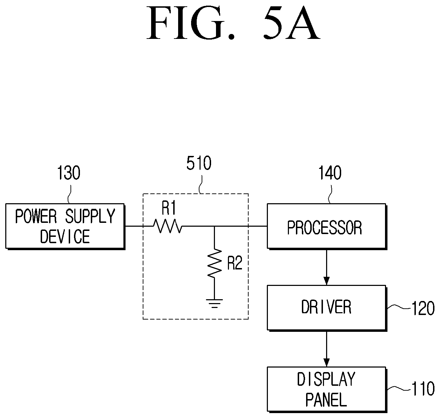

FIGS. 5A to 5C are diagrams for respectively explaining implementation examples of the detection circuit according to one or more embodiments.

Referring to FIG. 5A, a detection circuit 510 may include a first resistor R1 connected to an output terminal of the power supply device 130 and a second resistor R2 having one end connected to the first resistor R1 and the other end grounded. In one example, the output terminal of the power supply device 130, to which the first resistor R1 is connected, may include the power detection (V sense) line terminal for detecting the output voltage of the power supply device 130.

In one example, the processor 140 may identify whether the output voltage of the power supply device 130 is decreased to reach the predetermined voltage based on an output terminal voltage between the first resistor R1 and the second resistor R2.

For example, the output terminal voltage between the first resistor R1 and the second resistor R2 may be determined based on the output voltage of the power supply device 130 and sizes of the first resistor R1 and the second resistor R2. The sizes of the first resistor R1 and the second resistor R2 may be determined to have appropriate values based on the output voltage of the power supply device 130. For example, R1 and R2 may be set to have the appropriate values such as R1/(R1+R2)=1/10 if the output voltage of the power supply device 130 is 13 V and the predetermined voltage is set to 1.3.

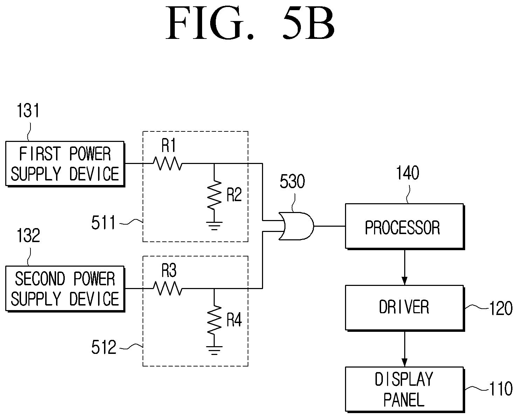

Referring to FIG. 5B, the display device 100 may include a plurality of power supply devices 131 and 132, and include a plurality of detection circuits 511 and 512 for detecting an output voltage of each of the plurality of power supply devices 131 and 132. In one example, the plurality of power supply devices 131 and 132 may be implemented to supply power to one display module.

The first detection circuit 511 may include the first resistor R1 connected to an output terminal of the first power supply device 131 and the second resistor R2 having one end connected to the first resistor R1 and the other end grounded. In one example, the output terminal of the first power supply device 131, to which the first resistor R1 is connected, may include a first power detection (V sense) line terminal for detecting the output voltage of the first power supply device 131.

In one example, the processor 140 may identify whether the output voltage of the first power supply device 131 is decreased to reach a predetermined first voltage based on the output terminal voltage between the first resistor R1 and the second resistor R2.

The second detection circuit 152 may include a third resistor R3 connected to an output terminal of the second power supply device 132 and a fourth resistor R4 having one end connected to the third resistor R3 and the other end grounded. In one example, the output terminal of the second power supply device 132, to which the third resistor R3 is connected, may include a second power detection (V sense) line terminal for detecting the output voltage of the second power supply device 132.

In one example, the processor 140 may identify whether the output voltage of the first power supply device 132 is decreased to reach a predetermined second voltage based on an output terminal voltage between the third resistor R3 and the fourth resistor R4. Here, the predetermined second voltage may be the same as or different from the predetermined first voltage. For example, sizes of the predetermined first voltage and the predetermined second voltage may each be determined based on power supplied from the first power supply device 131 and power supplied from the second power supply device 132.

According to one or more embodiments, a first output terminal of the first detection circuit 511 and a second output terminal of the second detection circuit 152 may be connected to each other through a logic circuit 530. In one example, the logic circuit may be implemented as an OR gate for outputting a low signal in case that a voltage of the first output terminal is low and a voltage of the second output terminal is low. Here, "low" may indicate a case where the output voltage is a voltage set for each output terminal or less, or a voltage less than the set voltage. In this case, the processor 140 may identify that power supplied to the power supply device 130 is off in case that the low signal is output from the logic circuit 530. That is, in case that display device 100 includes multiple the power supply devices, the processor 140 may perform the off sequence operation described above only if all of the plurality of power supply devices are off.

According to one or more embodiments, the off sequence information may include information on an order of blocking the plurality of signals provided to the driver 120. Here, the plurality of signals may include at least one of the reset signal, the power signal, the sync signal, and the clock signal. For example, each type of signal may include the plurality of signals. For example, the power signal may include the plurality of signals including a first power signal and a second power signal.

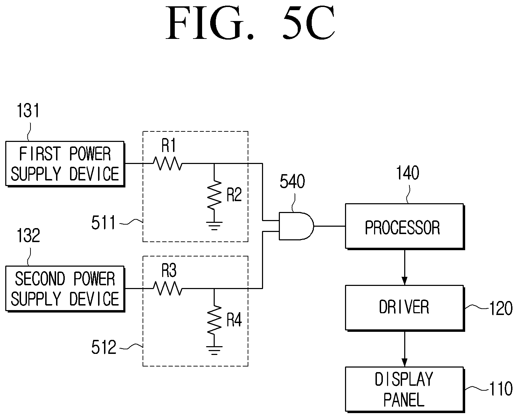

Referring to FIG. 5C, the display device 100 may include the plurality of power supply devices 131 and 132, and include the plurality of detection circuits 510 and 520 for detecting the output voltage of the plurality of power supply devices 131 and 132. In one example, the plurality of power supply devices 131 and 132 may be implemented to supply power to one display module.

The first detection circuit 511 may include the first resistor R1 connected to the output terminal of the first power supply device 131 and the second resistor R2 having one end connected to the first resistor R1 and the other end grounded. In one example, the output terminal of the power supply device 131, to which the first resistor R1 is connected, may include the first power detection (V sense) line terminal for detecting the output voltage of the first power supply device 131.

In one example, the processor 140 may identify whether the output voltage of the first power supply device 131 is decreased to reach the predetermined first voltage based on the output terminal voltage between the first resistor R1 and the second resistor R2.

The second detection circuit 152 may include the third resistor R3 connected to the output terminal of the second power supply device 132 and the fourth resistor R4 having one end connected to the third resistor R3 and the other end grounded. In one example, the output terminal of the second power supply device 132, to which the third resistor R3 is connected, may include the second power detection (V sense) line terminal for detecting the output voltage of the second power supply device 132.

In one example, the processor 140 may identify whether the output voltage of the second power supply device 132 is decreased to reach the predetermined second voltage based on the output terminal voltage between the third resistor R3 and the fourth resistor R4. Here, the predetermined second voltage may be the same as or different from the predetermined first voltage. For example, the sizes of the predetermined first voltage and the predetermined second voltage may each be determined based on power supplied from the first power supply device 131 and power supplied from the second power supply device 132.

According to one or more embodiments, the first output terminal of the first detection circuit 511 and the second output terminal of the second detection circuit 152 may be connected to each other through a logic circuit 540. In one example, the logic circuit may be implemented as an AND gate for outputting the low signal in case that any one of the voltage of the first output terminal or the voltage of the second output terminal is low. Here, "low" may indicate a case where the output voltage is the voltage set at each output terminal or less, or a voltage less than the set voltage. In this case, if the low signal is output from the logic circuit 540, the processor 140 may identify that power supplied from any one of the first power supply device 131 and the second power supply device 132 is off. In this case, the processor 140 may control the display panel 110 to be operated in the low luminance mode. For example, the display panel 110 may be controlled for a specific display module corresponding to the plurality of power supply devices 131 and 132 to be operated in the low luminance mode.

In one example, in case that one of the plurality of power supply devices 131 and 132 is off, the processor 140 may adjust a luminance value of each region of the display panel 110 to be lower based on power of the power supply device that is not off. In this case, the processor 140 may identify a current gain value for each subpixel that corresponds to the adjusted luminance value, and control the driver corresponding to each region of the display panel 110 based on the identified current gain value.

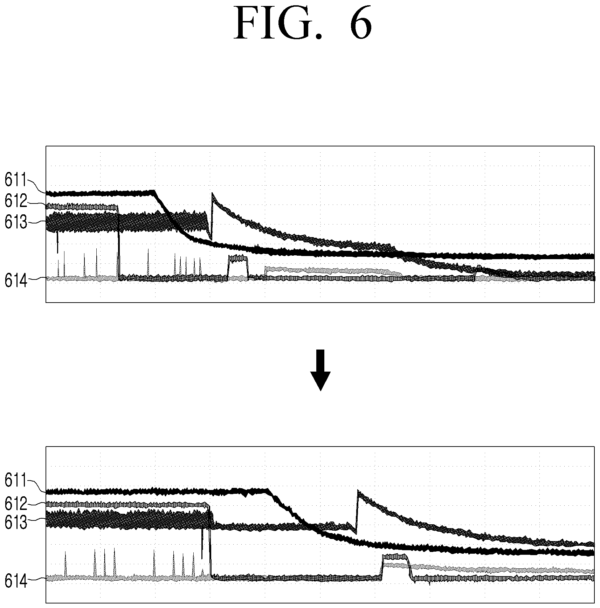

FIG. 6 is a diagram for explaining an off sequence operation according to one or more embodiments.

According to one or more embodiments, assume a case where the plurality of signals, for example, a driving signal V_LED 611, a clock signal SCLK 613, and a data signal SIN 614, are transmitted to the driver 120, and the off sequence information of the driver 120 is information for controlling the clock signal SCLK 613 and the data signal SIN 614 to reach the low state first before the driving signal V_LED 611.

In this case, if the power supply device 130 is off, the processor 140 may detect the signal (V sense) 612 output from the power supply device 130 to thus control for the clock signal SCLK 613 and the data signal SIN 614 among the plurality of signals 611, 613, and 614 to be in the low state first before the driving signal V_LED 611 (e.g., 3.8 V).

For example, referring to a signal waveform shown on a lower side after an embodiment of the present disclosure is applied although an upper side shows a signal waveform before an embodiment of the present disclosure is applied, in which the driving signal V_LED 611 is controlled to be in a lower state rather than the clock signal SCLK 613 and the data signal SIN 614, the processor 140 may control the clock signal SCLK 613 and the data signal SIN 614 to be in the low state first as soon as detecting the low state of the signal (V sense) 612 output from the power supply device 130, and then control the driving signal V_LED 611 to be in the low state for the driving signal V_LED 611 to correspond to the off sequence information of the driver 120.

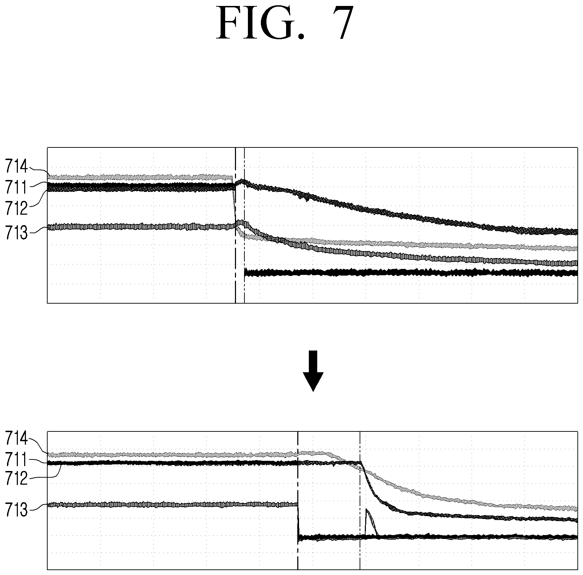

FIG. 7 is a diagram for explaining an off sequence operation according to one or more embodiments.

According to one or more embodiments, assume a case where the plurality of signals, for example, a reset signal 711, a first driving signal V_DD 712, and a second driving signal V_LED 714 are transmitted to the driver 120, and the off sequence information of the driver 120 is information for controlling the reset signal 711 to reach the low state first before the first driving signal V_DD 712 and the second driving signal V_LED 714.

In this case, if the power supply device 130 is off, the processor 140 may detect a signal (V sense) 713 output from the power supply device 130 to thus control for the reset signal 711 among the plurality of signals 711, 712, and 714 to be in the low state first before the first driving signal V_DD 712 and the second driving signal V_LED 714.

For example, referring to a signal waveform shown on a lower side after an embodiment of the present disclosure is applied although an upper side shows a signal waveform before an embodiment of the present disclosure is applied, in which the second driving signal V_LED 714 is controlled to be in a lower state rather than the reset signal 711, the processor 140 may control the reset signal 711 to be in the low state first as soon as detecting the low state of the signal (V sense) 713 output from the power supply device 130, and then control the first driving signal V_DD 712 to be in the low state for the second driving signal V_LED 714 to correspond to the off sequence information of the driver 120. That is, the processor 140 may first control the reset signal 711 to be in the low state based on off sequence information, and then control the power signal, that is, the first driving signal V_DD 712 and the second driving signal V_LED 714 to be in the low state.

Meanwhile, an interface signal transmitted to the driver 120 may include various signals based on implementation types of the driver 120, such as a Serial Peripheral Interface (SPI) signal, a CLK (clock) signal, and a Low-Voltage Differential Signaling (LVDS) signal.

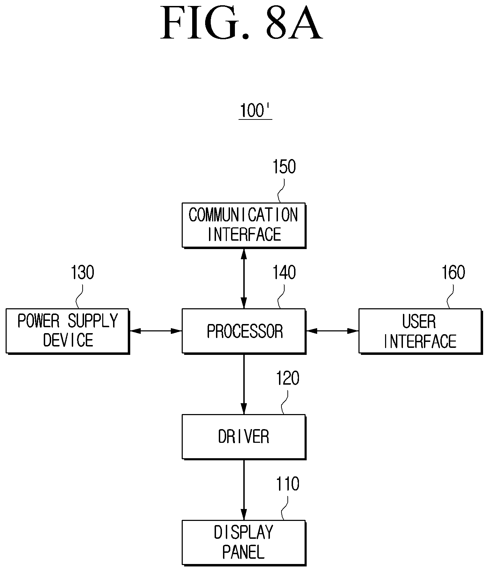

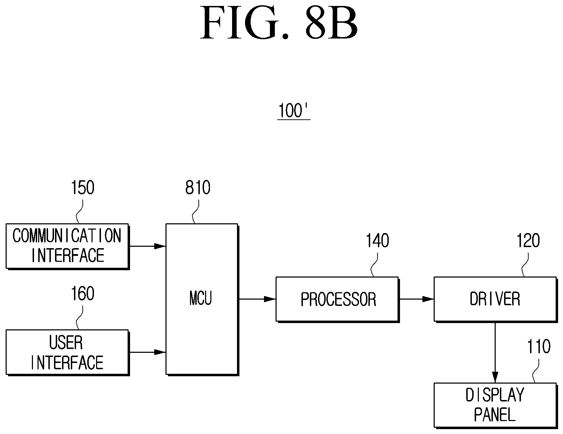

FIGS. 8A and 8B are diagrams for respectively explaining the driving method of a display device according to one or more embodiments.

Referring to FIG. 8A, a display device 100' may include the display panel 110, the driver 120, the power supply device 130, at least one processor 140, a communication interface 150, and a user interface 160. The description omits a detailed description of a component overlapping the component shown in FIG. 2 among the components shown in FIG. 8A.

The communication interface 150 may be implemented as various interfaces based on an implementation example of the display device 100'. For example, the communication interface 150 may communicate with the external device, an external storage medium (e.g., USB memory), an external server (e.g., a web hard) or the like by using a communication method such as a Bluetooth, an access point (AP) based wireless fidelity (Wi-Fi, i.e., wireless local area network (LAN)), a Zigbee, a wired/wireless local area network (LAN), a wide area network (WAN), Ethernet, an IEEE 1394, a high definition multimedia interface (HDMI), a universal serial bus (USB), a mobile high-definition link (MHL), an audio engineering society/European broadcasting union (AES/EBU) communication, an optical communication, or a coaxial communication. In one example, the communication interface 150 may communicate with another display device, the external server, and/or a remote control device, or the like.

The user interface 160 may be implemented as a device such as a button, a touch pad, a mouse or a keyboard, or may be implemented as a touch screen or the like which may also perform a manipulation input function in addition to the above-described display function.

In one example, in case of receiving an off signal through the communication interface 150 and/or the user interface 160, the processor 140 may sequentially control the plurality of signals transmitted to at least one driver to be in the low state based on the off sequence information before the power is shut down. For example, in case of receiving a power-off remote control signal from the remote control device, the processor 140 may sequentially control the plurality of signals transmitted to at least one driver to be in the low state based on the off sequence information before power of the display device 100' is shut down.

In one example shown in FIG. 8B, in case of receiving the off signal through the communication interface 150 and/or the user interface 160, the processor 140 may receive the off signal through a micro controller unit (MCU) 810. For example, the power-off remote control signal received through the communication interface 150 may be processed through the MCU 810 and then transmitted to the processor 140. In this case, the processor 140 may sequentially control the plurality of signals transmitted to at least one driver to be in the low state based on the off sequence information before power of display device 100' is shut down based on the off signal transmitted from the MCU 810.

As described above, the processor 140 may perform the same control operation based on an output signal of the power supply device 130, as well as the off signal received through the communication interface 150 and/or the user interface 160. A specific embodiment in which the plurality of signals transmitted to at least one driver are sequentially controlled to be in the low state based on the off sequence information is the same as those described with reference to FIGS. 1 to 7, and its detailed description is thus omitted.

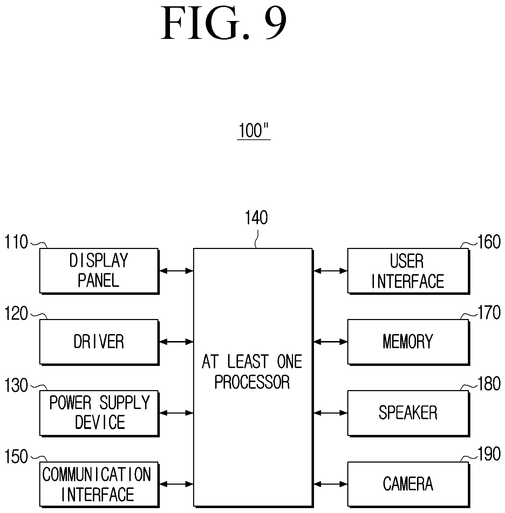

FIG. 9 is a block diagram specifically showing a configuration of the display device according to one or more embodiments.

Referring to FIG. 8A, a display device 100" may include the display panel 110, the driver 120, the power supply device 130, at least one processor 140, a communication interface 150, and a user interface 160, the memory 170, a speaker 180, and a camera 190. The description omits a detailed description of a component overlapping the component shown in FIGS. 2 and 8A among the component shown in FIG. 9.

The memory 170 may store data necessary for various embodiments. The memory 170 may be implemented as a memory embedded in the display device 100", or implemented as a memory detachable from the display device 100", based on a data storage purpose. For example, data for driving the display device 100" may be stored in the memory embedded in the display device 100", and data for an extension function of the display device 100 may be stored in the memory detachable from the display device 100". Meanwhile, the memory embedded in the display device 100" may be implemented as at least one of a volatile memory (for example, a dynamic random access memory (DRAM), a static RAM (SRAM), or a synchronous dynamic RAM (SDRAM)), a non-volatile memory (for example, an one time programmable read only memory (OTPROM), a programmable ROM (PROM), an erasable and programmable ROM (EPROM), an electrically erasable and programmable ROM (EEPROM), a mask ROM, or a flash ROM, a flash memory (for example, a NAND flash or a NOR flash), a hard drive, or a solid state drive (SSD)). In addition, the memory detachable from the display device 100" may be implemented in the form of a memory card (for example, a compact flash (CF), a secure digital (SD), a micro secure digital (Micro-SD), a mini secure digital (Mini-SD), an extreme digital (xD), or a multi-media card (MMC)), or an external memory which may be connected to a USB port (for example, the USB memory).

The memory 170 may store various data necessary for an operation of the display device 100". For example, the memory 170 may store the power ON/Off sequence information required for each driver IC. However, the information stored in the memory 170 may not be stored in the memory 170, and may be acquired from an external device. For example, some information may be received in real time from the external device such as a set-top box, the external server, or a user terminal. For example, the memory 170 may store current information of the plurality of display modules 110-1 to 110-n. Here, the current information may be current control information based on the luminance of each subpixel included in the display module. Here, the current control information based on the luminance of each subpixel may be the current control information based on the luminance of each subpixel calibrated (or modeled) based on a luminance feature and a color shift feature based on the current of each subpixel.

The speaker 180 may be a component outputting not only various audio data but also various notification sounds, voice messages, or the like. The processor 140 may control the speaker 180 to output feedbacks or various notifications in audio forms according to various embodiments of the present disclosure.

The camera 190 may be turned on based on a predetermined event and perform a capture. The camera 190 may convert a captured image to an electrical signal and generate image data based on the converted signal. For example, an object may be converted to an electrical image signal through a charge coupled device (CCD), and the converted image signal may be amplified and converted to a digital signal and then signal-processed. For example, the camera 190 may be implemented as a general camera, a stereo camera, a depth camera.

In addition, the display device 100" may include a sensor, a microphone, a tuner, and a demodulator, based on its implementation example.

The sensor may include various types of sensors, such as the touch sensor, a proximity sensor, an acceleration sensor (or a gravity sensor), a geomagnetic sensor, a gyro sensor, a pressure sensor, a position sensor, a distance sensor, or a light sensor.

The microphone is a component for receiving a user voice or another sound and converting the user voice or another sound to the audio data. However, according to another embodiment, the display device 100" may receive the user voice input through the external device through the communication interface 150.

The tuner may receive a radio frequency (RF) broadcast signal by tuning a channel selected by a user or all pre-stored channels among the RF broadcast signals received through an antenna.

The demodulator may receive and demodulate a digital intermediate frequency (DIF) signal converted by the tuner, and also perform channel decoding or the like.

According to the various embodiments described above, the processor 140 may detect the output voltage of the power supply device to thus control the signal based on the off sequence of the driver IC before the shutdown due to the AC power-off to prevent the screen transient.

In addition, the method according to the various embodiments of the present disclosure described above may be implemented only by the software upgrade or hardware upgrade of the conventional electronic device.

In addition, the various embodiments of the present disclosure described above may be performed through an embedded server disposed in the electronic device, or a server disposed outside the electronic device.

Meanwhile, according to an embodiment of the present disclosure, the various embodiments described above may be implemented in software including an instruction stored in a machine-readable storage medium (for example, a computer-readable storage medium). The machine may be a device that invokes the stored instruction from the storage medium, may be operated based on the invoked instruction, and may include the electronic device (e.g., electronic device A) according to the disclosed embodiments. In case that the instruction is executed by the processor, the processor may perform a function corresponding to the instruction directly or by using other components under control of the processor. The instruction may include a code provided or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

In addition, according to one or more embodiments of the present disclosure, the method according to the various embodiments described above may be included and provided in a computer program product. The computer program product may be traded as a product between a seller and a purchaser. The computer program product may be distributed in a form of the machine-readable storage medium (for example, a compact disc read only memory (CD-ROM)), or may be distributed online through an application store (for example, PlayStore^{™}). In case of the online distribution, at least a part of the computer program product may be at least temporarily stored or temporarily provided in a storage medium such as a memory of a server of a manufacturer, a server of an application store or a relay server.

In addition, each of the components (for example, modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner, or a heuristic manner, at least some of the operations may be performed in a different order or be omitted, or other operations may be added.

Although the embodiments are shown and described in the present disclosure as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. A display device (100, 100') comprising:
a display panel (110) including a plurality of light emitting elements;
at least one driver (120, 120-1) for driving the plurality of light emitting elements;
a power supply device (130, 130-1, 130-n, 131, 132); and
at least one processor (140) configured to
identify off sequence information of the at least one driver (120, 120-1) in case of detecting power supplied to the power supply device (130, 130-1, 130-n, 131, 132) as being off based on an output voltage of the power supply device (130, 130-1, 130-n, 131, 132), and
sequentially control a plurality of signals (611, 613, 614, 711, 712, 714) transmitted to the at least one driver (120, 120-1) to be in a low state based on the identified off sequence information before a voltage for driving the display panel (110) is shut down.

2. The device as claimed in claim 1, wherein the at least one processor (140) is configured to identify whether an alternating current, AC, power supplied through the power supply device (130, 130-1, 130-n, 131, 132) is off by detecting a power line through which a direct current, DC, voltage is output from the power supply device (130, 130-1, 130-n, 131, 132).

3. The device as claimed in claim 1, wherein the display panel (110) is a modular display panel (110) including the plurality of display modules (10, ..., 90), and
the at least one driver (120, 120-1) includes the plurality of drivers (120, 120-1) corresponding to the plurality of display modules (10, ..., 90).

4. The device as claimed in claim 3, wherein the power supply device (130, 130-1, 130-n, 131, 132) includes
a first power supply device (131) supplying power to a specific display module (10, ..., 90) among the plurality of display modules (10, ..., 90); and
a second power supply device (132) supplying power to the specific display module (10, ..., 90) among the plurality of display modules (10, ..., 90), and
the at least one processor (140) is configured to detect whether power supplied to the first power supply device (131) or the second power supply device (132) is off based on an output voltage of the first power supply device (131) or the second power supply device (132).

5. The device as claimed in claim 1, wherein the at least one processor (140) further includes a detection circuit (510, 511, 512, 520) for outputting an identified off sequence signal (611, 613, 614, 711, 712, 714) to the at least one driver (120, 120-1) in case that the output voltage of the power supply device (130, 130-1, 130-n, 131, 132) is decreased to reach a predetermined voltage as power supplied from the power supply device (130, 130-1, 130-n, 131, 132) is off.

6. The device as claimed in claim 5, wherein the detection circuit (510, 511, 512, 520) is connected to a power detection (V sense) line terminal for detecting the output voltage of the power supply device (130, 130-1, 130-n, 131, 132).

7. The device as claimed in claim 5, wherein the detection circuit (510, 511, 512, 520) includes a first resistor connected to an output terminal of the power supply device (130, 130-1, 130-n, 131, 132) and a second resistor having one end connected to the first resistor and the other end grounded, and
identifies whether the output voltage of the power supply device (130, 130-1, 130-n, 131, 132) is decreased to reach the predetermined voltage based on an output terminal voltage between the first resistor and the second resistor.

8. The device as claimed in claim 5, wherein the detection circuit (510, 511, 512, 520) includes a first detection circuit (511) connected to the first power supply device (131), a second detection circuit (152) connected to the second power supply device (132), and a logic circuit (530, 540) connected to a first output terminal of the first detection circuit (511) and a second output terminal of the second detection circuit (152),
the logic circuit (530, 540) is implemented as an OR gate for outputting a low signal (611, 613, 614, 711, 712, 714) in case that a voltage of the first output terminal is low and a voltage of the second output terminal is low, and
the at least one processor (140) is configured to identify that power supplied to the power supply device (130, 130-1, 130-n, 131, 132) is off in case that the low signal (611, 613, 614, 711, 712, 714) is output from the logic circuit (530, 540).

9. The device as claimed in claim 1, wherein the at least one processor (140) is configured to sequentially control a reset signal (711) and at least one power signal (611, 613, 614, 711, 712, 714), transmitted to the at least one driver (120, 120-1), to be in the low state, based on the identified off sequence information.

10. The device as claimed in claim 1, wherein the at least one processor (140) is configured to sequentially control the plurality of signals (611, 613, 614, 711, 712, 714) among a reset signal (711), at least one power signal (611, 613, 614, 711, 712, 714), at least one sync signal (611, 613, 614, 711, 712, 714), and at least one clock signal (611, 613, 614, 711, 712, 714), transmitted to the at least one driver (120, 120-1), to be in the low state based on the identified off sequence information.

11. A driving method of a display device (100, 100'), the method comprising:
identifying off sequence information of at least one driver (120, 120-1) for driving a display panel (110) in case that power supplied to a power supply device (130, 130-1, 130-n, 131, 132) is detected as being off based on an output voltage of the power supply device (130, 130-1, 130-n, 131, 132); and
sequentially controlling a plurality of signals (611, 613, 614, 711, 712, 714) transmitted to the at least one driver (120, 120-1) to be in a low state based on the identified off sequence information before a voltage for driving the display panel (110) is shut down.

12. The method as claimed in claim 11, wherein in the identifying of the off sequence information of the at least one driver (120, 120-1),
whether an alternating current, AC, power supplied through the power supply device (130, 130-1, 130-n, 131, 132) is off is identified by detecting a power line through which a direct current, DC, voltage is output from the power supply device (130, 130-1, 130-n, 131, 132).

13. The method as claimed in claim 11, wherein the display panel (110) is a modular display panel (110) including a plurality of display modules (10, ..., 90), and
the at least one driver (120, 120-1) includes the plurality of drivers (120, 120-1) corresponding to the plurality of display modules (10, ..., 90).

14. The method as claimed in claim 11, wherein the display device (100, 100') further includes a detection circuit (510, 511, 512, 520) for outputting an identified off sequence signal (611, 613, 614, 711, 712, 714) to the at least one driver (120, 120-1) in case that the output voltage of the power supply device (130, 130-1, 130-n, 131, 132) is decreased to reach a predetermined voltage as power supplied from the power supply device (130, 130-1, 130-n, 131, 132) is off.

15. A non-transitory computer-readable medium storing a computer instruction that causes an electronic device to perform an operation in case of being executed by a processor (140) of a display device (100, 100'), wherein the operation includes:
identifying off sequence information of at least one driver (120, 120-1) for driving a display panel (110) in case that power supplied to a power supply device (130, 130-1, 130-n, 131, 132) is detected as being off based on an output voltage of the power supply device (130, 130-1, 130-n, 131, 132); and
sequentially controlling a plurality of signals (611, 613, 614, 711, 712, 714) transmitted to the at least one driver (120, 120-1) to be in a low state based on the identified off sequence information before a voltage for driving the display panel (110) is shut down.
